**Europäisches Patentamt**

**European Patent Office**

**Office européen des brevets**

(19)

(11) Veröffentlichungsnummer: **0 299 326 B1**

(12) EUROPÄISCHE PATENTSCHRIFT

(45) Veröffentlichungstag der Patentschrift :
31.07.91 Patentblatt 91/31

(51) Int. Cl.⁵ : **F01D 25/34**

(21) Anmeldenummer : **88110665.2**

(22) Anmeldetag : **04.07.88**

(54) Wellendrehvorrichtung mit hydromechanischer Überholkupplung.

(30) Priorität : **15.07.87 DE 3723385**

(43) Veröffentlichungstag der Anmeldung :
**18.01.89 Patentblatt 89/03**

(45) Bekanntmachung des Hinweises auf die
Patenterteilung :
**31.07.91 Patentblatt 91/31**

(84) Benannte Vertragsstaaten :
**CH DE IT LI SE**

(56) Entgegenhaltungen :
**EP-A- 0 266 581**

(56) Entgegenhaltungen :
**DE-A- 2 521 315**
**DE-A- 2 627 032**
**DE-B- 1 276 655**
**DE-C- 2 732 036**
**US-A- 3 137 236**

(73) Patentinhaber : **Siemens Aktiengesellschaft**
**Wittelsbacherplatz 2**
**W-8000 München 2 (DE)**

(72) Erfinder : **Oeynhausen, Heinrich, Dr.**
**Schaaphausstrasse 34A**
**W-4330 Mülheim/Ruhr (DE)**
Erfinder : **Winkelhake, Ernst**
**Südstrasse 65**
**W-4630 Bochum 6 (DE)**

**Beschreibung**

Die vorliegende Erfindung betrifft eine Wellendrehvorrichtung mit Überholkupplung gemäß dem Oberbegriff des Anspruchs 1. Solche Wellendrehvorrichtungen sind beispielsweise aus der DE-AS 1956178 oder der DE-PS 2732036 bekannt.

Bei den Wellendrehvorrichtungen nach dem Stand der Technik sind im allgemeinen mechanische Überholkupplungen vorgesehen, welche bei Fehlbedienungen und den verschiedenen möglichen Betriebszuständen einem gewissen Verschleiß unterworfen sind und bei deren Betrieb auf die mechanischen Gegebenheiten Rücksicht genommen werden muß.

Aufgabe der vorliegenden Erfindung ist eine möglichst einfach anzusteuernde Wellendrehvorrichtung, bei welcher die Überholkupplung einem möglichst geringen Verschleiß unterworfen ist, so daß auch Bedienungsfehler oder Ungenauigkeiten z.B. der Zentrierung nicht zu einer vorzeitigen Zerstörung führen. Dabei soll die Wellendrehvorrichtung das Anfahren, das ständige langsame Drehen und auch das Abfangen einer Welle von höheren Drehzahlen ermöglichen. Unter Abfangen ist hier zu verstehen, daß die Wellendrehvorrichtung bei auslaufender Welle unterhalb einer bestimmten Drehzahl das Weiterdrehen übernimmt.

Zur Lösung dieser Aufgabe wird eine Wellendrehvorrichtung mit den kennzeichnenden Merkmalen des Anspruchs 1 vorgeschlagen. Durch hydraulisch gegen eine Federkraft bewegbare Kraftschlußelemente (gebräuchlich ist auch die Bezeichnung : Reibschlußelemente) läßt sich die Funktion der Kupplung sehr viel besser an die verschiedenen Anforderungen anpassen als dies durch von außen im allgemeinen nicht regelbare mechanische Anordnungen möglich ist. Durch gemeinsame Druckfluidversorgung von Kupplung und Hydromotor ist der Aufwand zur Steuerung der verschiedenen Betriebszustände minimal.

Der Anwendung entsprechend ist es besonders günstig, wie in Anspruch 2 angegeben, wenn die Kupplung in Ruhelage der Kraftschlußelemente ausgekuppelt und bei Beaufschlagung mit einem Druckfluid eingekuppelt ist. Gemäß Anspruch 3 besteht die Kupplung aus einem etwa topfförmigen Außenring und einem zentrisch darin liegenden Innenring. In dem Innenring sind 2 oder mehr Radialkolben, vorzugsweise 4 oder 5 als Kraftschlußelemente angeordnet, welche bei Beaufschlagung mit einem Druckfluid eine kraftschlüssige Verbindung zwischen Innen- und Außenring bewirken. Wie bei anderen Überholkupplungen sind Außenring bzw. Innenring mit den beiden zu kuppelnden Wellen verbunden.

Gemäß Anspruch 4 sind die Radialkolben an ihrem inneren Ende als Druckkolben ausgebildet, die über Druckfluidkanäle mit einem Druckfluid beaufschlagbar sind. Dabei kann das Druckfluid mittels einer Drucköldurchführung in die rotierenden Teile mit den weiteren Druckfluidkanälen von außen zugeführt werden, so daß eine Ansteuerung der Kupplung von außen möglich ist.

Die Ansprüche 5, 6, 7 und 8 geben weitere vorteilhafte Ausgestaltungen der Erfindung an, welche anhand der Zeichnung näher erläutert werden.

Abgesehen vom Aufbau der Überholkupplung selbst ist besonders das Zusammenwirken mit dem Hydromotor, d.h. die hydraulische Schaltung zum Betrieb einer erfindungsgemäßen Wellendrehvorrichtung von Bedeutung. Vorteilhafte Anordnungen bezüglich des Zusammenwirkens der Teile werden daher in den Ansprüchen 9, 10 und 11 angegeben und anhand der Zeichnung näher erläutert.

Gemäß den Ansprüchen 12 und 13 ist das Verfahren zum Betrieb solcher Wellendrehvorrichtungen besonders einfach, weil nach richtiger Einstellung der Anordnung nur noch ganz wenige Bedienungsschritte für alle notwendigen Funktionen zu beachten sind.

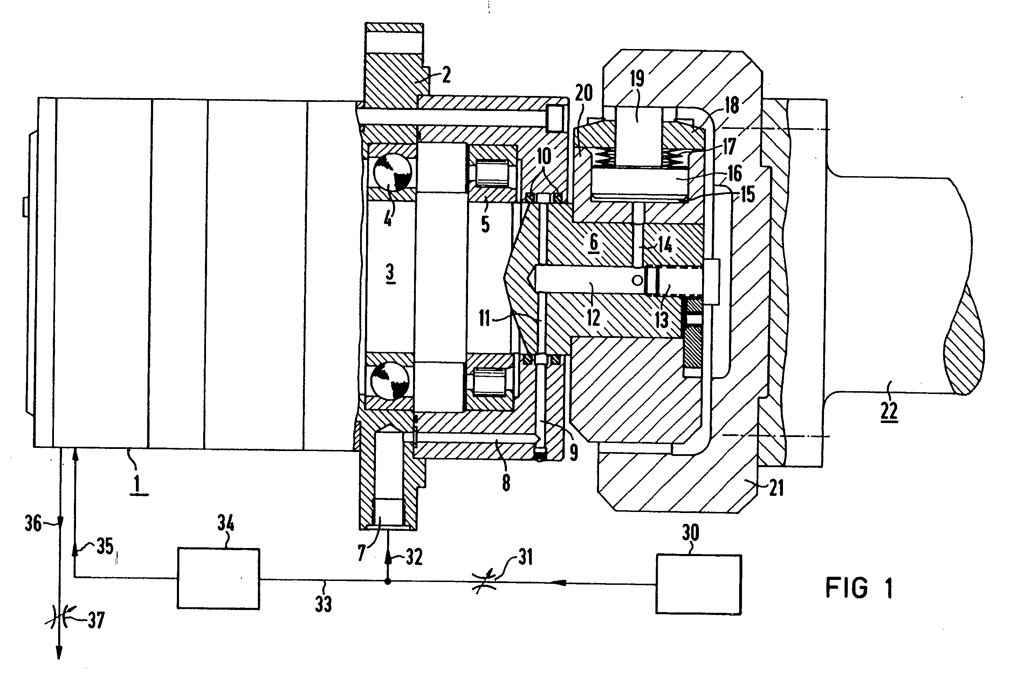

Ein Ausführungsbeispiel der Erfindung, anhand dessen auch die genaue Funktion noch einmal erläutert wird, ist in der Zeichnung dargestellt, und zwar zeigt Fig. 1 einen Längsschnitt durch eine erfindungsgemäße Wellendrehvorrichtung mit schematisch angedeuteter zugehöriger hydraulischer Schaltung und

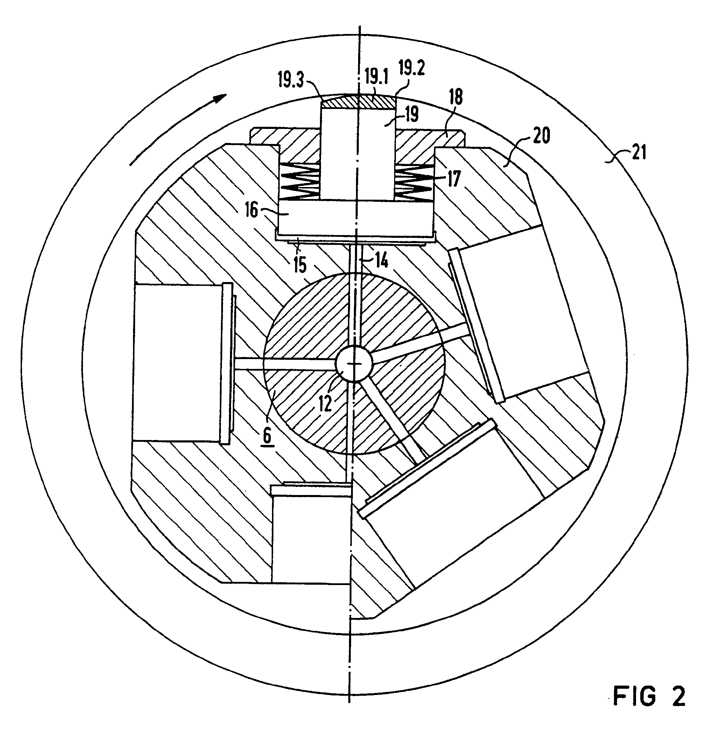

Fig. 2 einen Querschnitt durch die Überholkupplung in der Ebene der Radialkolben. In der Zeichnung ist der an sich bekannte Hydromotor 1 ohne Einzelheiten dargestellt. Erfindungsgemäß wird durch einen Befestigungsflansch 2 eine verstärkte Abtriebswelle 3 in Wellenlagerungen 4, 5 gehalten. Die Abtriebswelle 3 geht über in eine Hohlwelle 6, auf welcher der Innenring 20 der Überholkupplung befestigt ist. In dem Befestigungsflansch 2 ist ein Drucköleinlaß integriert, welcher mit Druckölkanälen 8, 9 kommuniziert, die das Drucköl weiterleiten zu einer Drucköldurchführung 10. An dieser Drucköldurchführung 10 wird das Öl von dem feststehenden Gehäuse der Vorrichtung in die rotierende Hohlwelle 6 geleitet und gelangt dort durch die Druckölkanäle 11 zur Zentralbohrung 12. Die Zentralbohrung 12 ist durch einen Verschlußstopfen 13 versehen. Weiterhin gelangt das Drucköl über radiale Bohrungen 14 in die Druckzylinderräume 15 zur Innenseite der Druckkolben 16. Die Druckkolben 16 stützen sich an ihrer Außenseite über Tellerfedern 17 an einem Widerlager 18 ab. Bei Zufuhr von Drucköl werden die Druckkolben 16 und damit die Radialkolben 19 gegen den Druck der Tellerfedern 17 nach außen gedrückt. An ihren äußeren Enden können die Radialkolben 19 einen Reibbelag 19.1 aufweisen, welcher so geformt ist, daß er in Drehrichtung gesehen vorn eine scharfe Ölabstreifkante 19.2 und hinten eine gerundete Kante 19.3 aufweist. Druckkolben 16 und Radialkolben 19 können auch insgesamt einstückig aus einem geeigenten Reibmaterial, z.B. Bronze, bestehen. Bei Beaufschlagung mit Drucköl werden die Radialkolben 19 gegen die Innenseite des Außenringes 21 gedrückt, welcher wiederum mit der anzutreibenden Maschinenwelle 22 verbunden ist. Aus den Spalten zwischen Radialkolben 19 und Widerlager 18 austretendes Öl schmiert die Innenseite dieses Außenringes mit einem Ölfilm, welcher beim Anfahren der Vorrichtung durch die Ölabstreifkante 19.2 schnell durchbrochen werden kann. Andererseits bewirkt die gerundete Kolbenseite 19.3 im Überholfall, daß die Radialkolben 19 auf dem Ölfilm aufschwimmen, auch wenn die Überholkupplung nicht sofort drucklos wird. Ein starker Verschleiß der Kolben 19 bzw. Reibbeläge 19.1 kann dadurch auch bei unsachgemäßer Betriebsweise vermieden werden, insbesondere wenn eine Materialpaarung gewählt wird, die auch gute Gleiteigenschaften hat, was z.B. bei Bronze und Stahl gegeben ist. Die Kolben 16, 19 werden wegen des gewünschten Ölaustritts mit genügend Spiel eingesetzt.

Wie in Fig. 2 schematisch angedeutet ist, hängt es von den Dimensionen der Überholkupplung und anderen Auslegungsfragen ab, wie viele Radialkolben in dem Innenring 20 angeordnet werden. Fig. 2 zeigt andeutungsweise die Anordnung von 4 bzw. 5 Radialkolben im Innenring 20.

Die hydraulische Schaltung zum Betrieb der erfindungsgemäßen Überholkupplung, die wesentlich für das Funktionieren in verschiedenen Betriebszuständen ist, ist schematisch in Fig. 1 dargestellt. Aus einem Hochdruckölsystem 30 werden über eine gemeinsame einstellbare Drossel 31 sowohl die Überholkupplung wie auch der Hydromotor über Zuleitungen 32 bzw. 33 mit Hochdrucköl versorgt. Für bestimmte Anwendungsfälle kann es nötig sein, wie weiter unten näher erläutert wird, noch ein Verzögerungsventil 34 vorzusehen, außerdem ist eine einstellbare Drossel 37 hinter dem Druckölauslaß des Hydromotors von Vorteil.

Zur näheren Erläuterung des Wesens der Erfindung sei im folgenden noch kurz die Funktion der Wellendrehvorrichtung erläutert:

Nach dem Einschalten der Ölzufuhr beginnt der Hydromotor zu drehen, bevor die Radialkolben der Kupplung nach außen gedrückt werden, da die Rückstellfedern der Kolben im allgemeinen mit einem höheren Ansprechdruck ausgelegt werden als der Motor. Es kommt deshalb zu einem kurzen Durchrutschen, bis die Kolben fest genug gegen den Außenring gedrückt werden, um den Motor wieder abbremsen und eine reibschlüssige Verbindung herstellen zu können. Durch eine geeignete Werkstoffpaarung, z.B. Kolben aus Bronze, Außenringe aus Stahl, und durch die Schmierung der Innenseite des Außenringes, entstehen dabei keine nachteiligen Folgen. Die Ölabstreifkante des Radialkolbens unterstützt dabei die schnelle Durchdringung des Ölfilms bis zu einer reibschlüssigen Verbindung. Die Wellendrehvorrichtung beschleunigt anschließend die Welle, bis die gewünschte mit der gemeinsamen Drossel im Zulauf einstellbare Drehzahl erreicht ist.

Da das präzise Funktionieren der aufeinander abzustimmenden Bauteile von der Viskosität des verwendeten Öls und von dessen Temperatur abhängt, kann es beim Anfahren mit kaltem und damit zähem Öl vorkommen, daß die Kolben den Ölfilm zum Außenring nicht schnell genug durchstoßen und dann hydrodynamisch aufschwimmen. Der Hydromotor erhöht dann seine Drehzahl und ein Reibschluß ist nicht mehr möglich, da durch den schnell ansteigenden Durchfluß im Hydromotor der Druck an der Druckölzuleitung der Kupplung sogar wieder absinkt. Falls ein solcher Betriebsfall zu berücksichtigen ist, so kann ein Verzögerungsventil in den Zulauf des Hydromotors eingebaut werden. Ein solches Ventil darf den Durchfluß zum Motor erst bei einem Druck freigeben, bei dem die Radialkolben der Kupplung schon nach außen gedrückt sind. Der Haltedruck dieses Verzögerungsventils, also der Druck, bis zu dem das Ventil offenbleibt, muß jedoch deutlich niedriger liegen als der Öffnungsdruck, damit die anderen Funktionen der Wellendrehvorrichtung nicht nachteilig beeinflußt werden.

Mit dem Anfahren der gedrehten Turbomaschine wird der Hydromotor mehr und mehr entlastet und schließlich über die Kupplung mitgenommen. In diesem Falle geht der Hydromotor vom aktiven Betrieb zu einem passiven Betrieb über, in welchem er quasi als Pumpe arbeitet. Als Folge des steigenden Öldurchflusses im Hydromotor fällt der Druck vor dem Motor und damit auch am Eingang der Kupplung so weit ab, daß die Radialkolben durchrutschen und die Verbindung trennen. Im Zusammenspiel zwischen der Rückstellfederkraft und dem Druck vor Motor und Kupplung stellt sich ein stabiler Zustand ein, bei dem die Kolben mit nur noch geringen Anpreßkräften auf dem Außenring gleiten. Um genau diesen Zustand zu erreichen, wird die Drossel im Ablauf des Hydromotors gerade so eingestellt, daß der Druck vor Motor und Kupplung im Überholfall nicht unter den Ansprechdruck der Rückstellfedern fällt. Bei weiterer Erhöhung der Turbomaschinendrehzahl und ausreichendem Ölzufluß können die Radialkolben auf dem Ölfilm an der Innenseite des Außenringes hydrodynamisch aufschwimmen, was durch die gerundete Kolbenseite begünstigt wird. Auch wenn die Drehvorrichtung nicht sofort abgeschaltet wird, ist somit kein vorzeitiger Verschleiß des Reibbelages bzw. des Kolbens und des Außenringes zu befürchten. Bei richtiger Einstellung der Drossel im Ablauf ist der Druck hinter dem Hydromotor geringfügig größer als vor dem Motor, da durch die gleitende Kupplung ein geringes Reibmoment übertragen wird und der Hydromotor somit weiterhin als Pumpe wirkt.

Beim Auslaufen der Turbomaschine wird bei Unterschreiten einer bestimmten vorgegebenen Drehzahl die Wellendrehvorrichtung zugeschaltet. Liegt diese Grenzdrehzahl oberhalb der vorgesehenen Drehzahl der Wellendrehvorrichtung, so stellt sich selbsttätig der eben beschriebene Zustand des Überholens an der Kupplung ein. Fällt nun die Maschinendrehzahl unter die Drehzahl der Wellendrehvorrichtung, so wird der Hydromotor über die Kupplung abgebremst, der Öldurchfluß sinkt und der Druck vor Motor und Kupplung steigt, so daß die Wellendrehvorrichtung allmählich den Antrieb der Welle übernimmt. Erfolgt das Zuschalten der Wellendrehvorrichtung bei einer Grenzdrehzahl unterhalb der vorgesehenen Drehzahl der Wellendrehvorrichtung, so ergibt sich ein Vorgang, der dem Anfahren aus dem Stillstand ähnlich ist.

Nachdem die einstellbaren Drosseln entsprechend der Dimensionierung aller Bauteile einmal eingestellt sind, beschränkt sich die Bedienung der erfindungsgemäßen Wellendrehvorrichtung auf das Ein- bzw. Ausschalten, wobei sogar ein verzögertes Ausschalten den Verschleiß nur geringfügig erhöht.

**Patentansprüche**

1. Wellendrehvorrichtung, insbesondere für Turbomaschinen, mit einem Hydromotor (1) als Antriebselement und einer Kupplung als Verbindungselement zu der zu drehenden Welle (22), **dadurch gekennzeichnet**, daß die Kupplung hydraulisch gegen Federkraft (17) bewegbare Kraftschlußelemente (19) enthält, wobei die Druckfluidzuleitung (32) der Kupplung mit der Druckfluidzuleitung (33) des Hydromotors (1) so in Verbindung steht, daß der Druck in der Druckfluidzuleitung (32) der Kupplung im Überholfall durch den als Pumpe arbeitenden Hydromotor (1) absenkbar ist.

2. Wellendrehvorrichtung nach Anspruch 1, **dadurch gekennzeichnet**, daß die Kupplung in Ruhelage der Kraftschlußelemente (19) ausgekuppelt und bei Beaufschlagung mit einem Druckfluid eingekuppelt ist.

3. Wellendrehvorrichtung nach Anspruch 1 oder 2, **dadurch gekennzeichnet**, daß die Kupplung aus einem, vorzugsweise mit der zu drehenden Welle (22) verbundenen, topfförmigen Außenring (21) und einem konzentrisch darin liegenden Innenring (20), der vorzugsweise mit der Antriebswelle (3) des Hydromotors (1) verbunden ist, besteht, wobei in dem Innenring (20) zwei oder mehr Radialkolben (19) als Kraftschlußelemente angeordnet sind, welche unter Beaufschlagung mit einem Druckfluid eine kraftschlüssige Verbindung zwischen Innenring (20) und Außenring (21) bewirken.

4. Wellendrehvorrichtung nach Anspruch 3, **dadurch gekennzeichnet**, daß die Radialkolben (19) an ihrem inneren Ende als Druckkolben (16) ausgebildet sind, die über Druckfluidkanäle (7, 8, 9, 11, 12, 14) mit einem Druckfluid beaufschlagbar sind.

5. Wellendrehvorrichtung nach Anspruch 3 oder 4, **dadurch gekennzeichnet**, daß die Radialkolben (19) gegen den Druck von Tellerfedern (17) nach außen bewegbar sind.

6. Wellendrehvorrichtung nach Anspruch 3, 4 oder 5, **dadurch gekennzeichnet**, daß die Radialkolben (19) an ihrer Außenseite mit einem Belag (19.1) versehen sind oder vollständig aus einem Werkstoff bestehen, der eine geeignete Werkstoffpaarung einerseits für reibschlüssige Verbindungen mit dem Material des Außenringes (21) bildet, wobei gleichzeitig andererseits im Überholfall gute Gleiteigenschaften vorhanden sind, z.B. Kolben- oder Reibbelag aus Bronze und Außenring aus Stahl.

7. Wellendrehvorrichtung nach Anspruch 3, 4, 5 oder 6, **dadurch gekennzeichnet**, daß der Radialkolben (19) an seiner Außenseite in Drehrichtung gesehen vorne eine scharfe Ölabstreifkante (19.2) und hinten eine gerundete Kante (19.3) aufweist.

8. Wellendrehvorrichtung nach Anspruch 3, 4, 5, 6 oder 7, **dadurch gekennzeichnet**, daß die Innenseite des Außenringes (21) geschmiert wird, vorzugsweise mit Öl, welches aus den Spalten zwischen Kolben (16, 19) und Innenring (20), bzw. Widerlager (18), austritt.

9. Wellendrehvorrichtung nach einem der vorhergehenden Ansprüche, **dadurch gekennzeichnet**, daß der Hydromotor und die hydraulische Kupplung über eine gemeinsame, vorzugsweise einstellbare, Drossel (31) an die gleiche Drucköllversorgung angeschlossen sind.

10. Wellendrehvorrichtung nach Anspruch 9, **dadurch gekennzeichnet**, daß in die Druckölzuleitung (33) zwischen Hydromotor (1) und Kupplung ein Verzögerungsventil (34) zwischengeschaltet ist, welches den Zulauf zum Hydromotor (1) erst ab einem vorgegebenen Mindestdruck freigibt, aber auch bei niedrigerem Druck noch offenhält.

11. Wellendrehvorrichtung nach Anspruch 9 oder 10, **dadurch gekennzeichnet**, daß der Drucköllauslaß (36) des Hydromotors (1) mit einer Drossel (37) versehen ist, vorzugsweise einer einstellbaren Drossel.

12. Verfahren zum Betrieb einer Wellendrehvorrichtung gemäß einem der Ansprüche 9, 10 oder 11, **dadurch gekennzeichnet**, daß entsprechend der Viskosität des Druckfluids und der Auslegung von Druckkolben (16) und Tellerfeder (17) der Öldruck hinter der gemeinsamen Drossel (31) beim Anfahren so eingestellt wird, daß die Radialkolben (19) vor oder bei dem Anlaufen des Hydromotors (1) eine reibschlüssige Verbindung zum Außenring (21) herstellen, welche sich im Überholfall löst, sobald der Hydromotor (1) passiv als Pumpe zu arbeiten beginnt und den Druck in den Druckölzuleitungen (32, 33) absenkt.

13. Verfahren nach Anspruch 12, **dadurch**

**gekennzeichnet,** daß der Öldruck hinter der gemeinsamen Drossel (31) beim Abfangen der Welle so eingestellt wird, daß die Radialkolben (19) bis zum Erreichen einer vorgebbaren Grenzdrehzahl zunächst schleifend eingreifen und bei Unterschreiten dieser Drehzahl den Hydromotor abbremsen, wodurch der Druck in den Drucköizuleitungen (32, 33) steigt und die Radialkolben eine Reibschlußverbindung zum Außenring (21) bilden.

## Claims

1. Shaft-turning device, in particular for turbo-engines, having a hydraulic motor (1) as drive element and a clutch as connecting element in respect of the shaft (22) which is to be turned, characterised in that the clutch contains force-locking elements (19) which can be moved hydraulically against spring force (17), with the pressure fluid supply line (32) of the clutch communicating with the pressure fluid supply line (33) of the hydraulic motor (1) such that the pressure in the pressure fluid supply line (32) of the clutch can be lowered in the case of overrunning by the hydraulic motor (1) which operates as a pump.

2. Shaft-turning device according to claim 1, characterised in that the clutch is disengaged in the rest position of the force-locking elements (19) and engaged under the action of a pressure fluid.

3. Shaft-turning device according to claim 1 or 2, characterised in that the clutch consists of a pot-shaped outer ring (21), which is preferably connected with the shaft (22) which is to be turned, and an inner ring (20) which lies concentrically therein and is preferably connected with the drive shaft (3) of the hydraulic motor (1), in which case there are arranged in the inner ring (20) two or more radial pistons (19) as force-locking elements which, under the action of a pressure fluid, effect a force-locking connection between inner ring (20) and outer ring (21).

4. Shaft-turning device according to claim 3, characterised in that the radial pistons (19) are formed at their inner end as pressure pistons (16) upon which a pressure fluid can act by way of pressure fluid channels (7, 8, 9, 11, 12, 14).

5. Shaft-turning device according to claim 3 or 4, characterised in that the radial pistons (19) can be moved outwards against the pressure of cup springs (17).

6. Shaft-turning device according to claim 3, 4 or 5, characterised in that the radial pistons (19) are provided on their outside with a covering (19.1) or completely consist of a material which forms a suitable material pairing, on the one hand, for friction-locking connections with the material of the outer ring (21), in which case at the same time, on the other hand, in the case of overrunning, good sliding properties are present, for example, piston or friction covering of bronze and outer ring of steel.

7. Shaft-turning device according to claim 3, 4, 5 or 6, characterised in that the radial piston (19) has, on its outside, viewed in the direction of rotation, at the front a sharp oil-stripping edge (19.2) and at the rear a rounded edge (19.3).

8. Shaft-turning device according to claim 3, 4, 5, 6 or 7, characterised in that the inside of the outer ring (21) is lubricated, preferably with oil, which issues from the gaps between piston (16, 19) and inner ring (20) or abutment (18) respectively.

9. Shaft-turning device according to one of the preceding claims, characterised in that the hydraulic motor and the hydraulic clutch are connected to the same pressure oil supply by way of a common, preferably adjustable, throttle (31).

10. Shaft-turning device according to claim 9, characterised in that interconnected into the pressure oil supply line (33) between hydraulic motor (1) and clutch there is a delay valve (34) which releases the inflow to the hydraulic motor (1) only after a given minimum pressure, yet also keeps it open further in the case of lower pressure.

11. Shaft-turning device according to claim 9 or 10, characterised in that the pressure oil outlet (36) of the hydraulic motor (1) is provided with a throttle (37), preferably with an adjustable throttle.

12. Method for the operation of a shaft-turning device according to one of the claims 9, 10 or 11, characterised in that in accordance with the viscosity of the pressure fluid and the design of pressure pistons (16) and cup springs (17) the oil pressure behind the common throttle (31) is adjusted when starting such that the radial pistons (19) before or during the start-up of the hydraulic motor (1) establish a friction-locking connection in relation to the outer ring (21) which is released in the case of overrunning as soon as the hydraulic motor (1) begins to operate passively as a pump and lowers the pressure in the pressure oil supply lines (32, 33).

13. Method according to claim 12, characterised in that the oil pressure behind the common throttle (31) is adjusted when staying the shaft such that the radial pistons (19) in the first instance engage in a sliding manner until a limit speed which can be preset is reached and with a falling short of this speed brake the hydraulic motor, whereby the pressure rises in the pressure oil supply lines (32, 33) and the radial pistons establish a friction-locking connection in relation to the outer ring (21).

## Revendications

1. Dispositif d'entraînement d'un arbre en rotation, notamment pour des turbomachines, comportant un moteur hydraulique (1) comme élément d'entraînement et un accouplement comme élément de raccordement à l'arbre (22) devant être entraîné en rotation, caractérisé par le fait que l'accouplement comporte des éléments (19) de transmission de force qui peuvent être déplacés hydrauliquement à l'encontre de la force (17) d'un ressort, la canalisation (32) d'amenée du fluide sous pression à l'accouplement étant raccordée à la canalisation (33) d'amenée du fluide sous pression du moteur hydraulique (1) de sorte que la pression dans la canalisation (32) d'amenée du fluide sous pression de l'accouplement peut être réduite, dans le cas d'une survitesse, par le moteur hydraulique (1) fonctionnant en pompe.

2. Dispositif d'entraînement d'un arbre en rotation suivant la revendication 1, caractérisé par le fait que l'accouplement est débrayé lorsque les éléments (19) de transmission de force sont au repos et est embrayé lorsqu'il est chargé par un fluide sous pression.

3. Dispositif d'entraînement d'un arbre en rotation suivant la revendication 1 ou 2, caractérisé par le fait que l'accouplement est constitué par une bague extérieure en forme de pot (21), raccordée de préférence à l'arbre (22) devant être entraîné en rotation, et par une bague intérieure (20) disposée concentriquement à l'intérieur de la bague extérieure et raccordée de préférence à l'arbre d'entraînement (3) du moteur hydraulique (1), et que dans la bague intérieure (20) sont disposés, en tant qu'éléments de transmission de force, deux ou plusieurs pistons radiaux (19) qui, lorsqu'ils sont chargés par un fluide sous pression, établissent une liaison de transmission de force entre la bague intérieure (20) et la bague extérieure (21).

4. Dispositif d'entraînement d'un arbre en rotation suivant la revendication 3, caractérisé par le fait que les pistons radiaux (19) sont réalisés, au niveau de leur extrémité extérieure, sous la forme de pistons de compression (16), qui peuvent être chargés par un fluide sous pression, par l'intermédiaire de canaux (7, 8, 9, 11, 12, 14) d'alimentation en fluide sous pression.

5. Dispositif d'entraînement d'un arbre en rotation suivant la revendication 3 ou 4, caractérisé par le fait que les pistons radiaux (19) peuvent être déplacés de l'extérieur, à l'encontre de la pression de rondelles-ressorts (17).

6. Dispositif d'entraînement d'un arbre en rotation suivant la revendication 3, 4 ou 5, caractérisé par le fait que les pistons radiaux (19) comportent, sur leur face extérieure, un revêtement (19.1) ou sont réalisés entièrement en un matériau qui d'une part forme, avec le matériau de la bague extérieure (21), un couple approprié de matériaux pour l'établissement de liaisons avec frottement, tandis que par ailleurs, dans le cas d'une survitesse, on obtient simultanément de bonnes caractéristiques de glissement, par exemple dans le cas d'un revêtement de piston ou d'une garniture de friction en bronze et d'une plaque extérieure en acier.

7. Dispositif d'entraînement d'un arbre en rotation suivant la revendication 3, 4 ou 5 ou 6, caractérisé par le fait que le piston radial (19) possède, sur sa face extérieure, sur son côté avant dans le sens de rotation, un segment racleur d'huile (19.2) à arête vive et, sur le côté aval, une arête arrondie (19.3).

8. Dispositif d'entraînement d'un arbre en rotation suivant la revendication 3, 4, 5, 6 ou 7, caractérisé par le fait que la face intérieure de la bague extérieure (21) est lubrifiée, de préférence avec de l'huile qui sort des fentes situées entre les pistons (16, 19) et la bague intérieure (20) ou la butée (18).

9. Dispositif d'entraînement d'un arbre en rotation suivant l'une des revendications précédentes, caractérisé par le fait que le moteur hydraulique et l'accouplement hydraulique sont raccordés, par l'intermédiaire d'un étranglement (31), de préférence réglable, à la même alimentation en huile sous pression.

10. Dispositif d'entraînement d'un arbre en rotation suivant la revendication 9, caractérisé par le fait que dans la canalisation (33) d'amenée de l'huile sous pression est intercalée, entre le moteur hydraulique (1) et l'accouplement, une vanne de décélération (34) qui libère l'alimentation en direction du moteur électrique (1) uniquement à partir d'une pression minimale prédéterminée, mais la maintient également à une pression plus faible.

11. Dispositif d'entraînement d'un arbre en rotation suivant la revendication 9 ou 10, caractérisé par le fait que la sortie (36) de l'huile sous pression du moteur hydraulique (1) comporte un étranglement (37), de préférence un étranglement réglable.

12. Procédé pour faire fonctionner un dispositif d'entraînement d'un arbre en rotation suivant l'une des revendications 9, 10 ou 11, caractérisé par le fait qu'en fonction de la viscosité du fluide sous pression et de l'agencement des pistons de compression (16) et des rondelles-ressorts (17), on règle la pression de l'huile en aval d'étranglements communs (31), lors du démarrage, de manière que les pistons radiaux (19) établissent avant ou lors du démarrage du moteur hydraulique (1), une liaison par frottement avec la bague extérieure (21), qui est supprimée dans le cas d'une survitesse, dès que le moteur (1) commence à fonctionner d'une manière passive en tant que pompe et réduit la pression dans les canalisations (32, 33) d'amenée de l'huile sous pression.

13. Procédé suivant la revendication 12, caractérisé par le fait que la pression de l'huile en aval de l'étranglement commun (31) est réglée, lors de l'interception de l'arbre, de manière que les pistons radiaux (19) agissent tout d'abord en patinant jusqu'à ce que soit atteinte une vitesse de rotation limite pouvant être prédéterminée, et freinent le moteur hydraulique, lors du dépassement de cette vitesse de rotation par le bas, ce qui a pour effet que la pression dans les canalisations (32, 33) d'amenée de l'huile sous pression augmente et que les pistons radiaux établissent une liaison de frottement avec la bague extérieure (22).

FIG 1

FIG 2